# EUROPEAN PATENT APPLICATION

(11) **EP 4 401 292 A1**
(43) Date of publication of application: **17.07.2024**
(21) Application number: 23212998.1
(22) Date of filing: 29.11.2023
(51) Int. Cl.: H02M 1/32, H02J 7/34, B60R 16/00, H02M 1/36

(54) **CONVERTER SYSTEM FOR VEHICLE**

(30) Priority: 16.01.2023 KR 20230006131
(71) Applicant: Samsung SDI Co., Ltd., Yongin-si, Gyeonggi-do 17084 (KR)
(72) Inventor: YOO, Kwang Min, 17084 Yongin-si (KR); KIM, Duck Hyun, 17084 Yongin-si (KR); SEO, Gi Ho, 17084 Yongin-si (KR); KOO, Kyo Sung, 17084 Yongin-si (KR)
(74) Representative: Marks & Clerk LLP

(57) **Abstract**

A converter system for a vehicle including: a bi-directional converter electrically connected between a main battery and an auxiliary battery and configured to perform power conversion; a gate driver electrically connected to the bi-directional converter and configured to apply a PWM signal for controlling a driving mode of the bi-directional converter; a converter controller electrically connected to the gate driver and configured to apply a control signal for controlling driving of the gate driver; a control switch interposed between the converter controller and the gate driver and configured to connect or disconnect a connection between the converter controller and the gate driver; and a battery management system electrically connected to the gate driver through the control switch and configured to apply a control signal to control driving of the gate driver based on an abnormality in the converter controller.

## Description

### BACKGROUND

### 1. Field

Aspects of some embodiments of the present disclosure relate to a converter system for a vehicle.

### 2. Description of the Related Art

Recently, due to strengthening of environmental regulations including CO₂ regulations, interest in environmentally-friendly vehicles has been increasing. Accordingly, vehicle companies have been actively researching and attempting to develop environmentally-friendly vehicles such as pure electrical vehicles and hydrogen vehicles, as well as hybrid or plug-in hybrid vehicles and mild hybrid vehicles.

For example, a mild hybrid vehicle may be driven through an internal combustion engine and may be provided with additional power from a main battery. In addition, a converter and other electrical components may be interposed between the main battery and an auxiliary battery for the electric load, and may be mounted to charge the auxiliary battery from the main battery. Additionally, in a situation where vehicle deceleration is required, the main battery may also be charged by regenerative braking.

A DC/DC converter may be installed between a high-voltage main battery and a low-voltage auxiliary battery. The DC/DC converter may receive a control signal from a converter controller included in a vehicle, and convert a high voltage output of the main battery into a required voltage according to a control signal to charge the auxiliary battery. Generally, in a charging mode of the main battery, the output voltage of the DC/DC converter may be increased to store as much energy as possible in the auxiliary battery, and in a discharging mode of the main battery, the output voltage of the DC/DC converter may be lowered to minimize or reduce power consumption of the main battery.

However, when a failure occurs in a converter controller that controls driving of the DC/DC converter and a voltage is not supplied to the auxiliary battery, all electronic control systems in the vehicle may stop operating, which may cause a safety and/or operational hazard.

The above information disclosed in this Background section is only for enhancement of understanding of the background and therefore the information discussed in this Background section does not necessarily constitute prior art.

### SUMMARY

Aspects of some embodiments of the present disclosure include a converter system for a vehicle, in which a battery management system can control driving of a bi-directional converter even when a converter controller fails, and thus vehicle safety can be relatively improved.

According to some embodiments of the present disclosure, a converter system for a vehicle includes: a bi-directional converter electrically connected between a main battery and an auxiliary battery to perform power conversion; a gate driver electrically connected to the bi-directional converter and applying a PWM signal for controlling a driving mode of the bi-directional converter; a converter controller electrically connected to the gate driver and applying a control signal for controlling driving of the gate driver; a control switch interposed between the converter controller and the gate driver and connecting or disconnecting a connection between the converter controller and the gate driver; and a battery management system electrically connected to the gate driver through the control switch and applying a control signal to control driving of the gate driver when an abnormality is determined in the converter controller.

According to some embodiments, the control switch may have a common terminal connected to the gate driver, a first terminal connected to the converter controller, and a second terminal connected to the battery management system, and the common terminal may be electrically connected to the first terminal or the second terminal.

According to some embodiments, the battery management system may control driving of the control switch according to whether there is an abnormality in the converter through communication with the converter controller.

According to some embodiments, the battery management system may control the gate driver to drive the bi-directional converter in a buck mode.

According to some embodiments, the battery management system may be electrically connected to the control switch and may control driving of the control switch according to whether there is an abnormality in the converter controller.

According to some embodiments, the battery management system may be electrically connected to the main battery to monitor and control charging and discharging of the main battery.

In addition, a converter system for a vehicle, according to some embodiments of the present disclosure may include: a bi-directional converter electrically connected between a main battery and an auxiliary battery to perform power conversion; at least one gate driver electrically connected to the bi-directional converter and applying a PWM signal for controlling a driving mode of the bi-directional converter; a converter controller electrically connected to the gate driver and applying a control signal for controlling driving of the gate driver; a control switch interposed between the gate driver and the bi-directional converter and connecting or disconnecting a connection between the gate driver and the bi-directional converter; and a battery management system electrically connected to the gate driver and controlling driving of the bi-directional converter through the gate driver by controlling driving of the control switch when an abnormality is determined in the converter controller.

According to some embodiments, the bi-directional converter may include: a main capacitor connected in parallel with the main battery; a first switch and a second switch connected in parallel to the main capacitor and connected in series to each other; an inductor having a first electrode connected between the first switch and the second switch, and having a second electrode connected to the auxiliary battery; and an auxiliary capacitor connected in parallel with the auxiliary battery.

According to some embodiments, the gate driver may include: a first gate driver electrically connected between the converter controller and the control switch; and a second gate driver electrically connected between the battery management system and the control switch.

According to some embodiments, the control switch may include: a first control switch having a common electrode electrically connected to a control electrode of the first switch and electrically connecting the first gate driver or the second gate driver to the first switch; and a second control switch having a common electrode electrically connected to a control electrode of the second switch and electrically connecting the first gate driver or the second gate driver to the second switch.

According to some embodiments, the first control switch and the second control switch may operate in the same way, and both are connected to the first gate driver, or both are electrically connected to the second gate driver.

At least some of the above and other features of the invention are set out in the claims.

### BRIEF DESCRIPTION OF DRAWINGS

FIG. 1 is a structural diagram showing a vehicle converter system according to some embodiments of the present disclosure.
FIG. 2 is a structural diagram showing a vehicle converter system according to some embodiments of the present disclosure.

### DETAILED DESCRIPTION

Hereinafter, aspects of some embodiments of the present disclosure will be described in more detail with reference to the accompanying drawings.

Aspects of some embodiments of the present disclosure are described and illustrated to more completely explain aspects of some embodiments of the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

Aspects of some embodiments of the present disclosure will now be described in more detail with reference to the accompanying drawings to the extent that a person skilled in the art to which the present disclosure belongs can easily implement the present disclosure.

Here, the same reference numerals are attached to parts having similar configurations and operations throughout the specification. In addition, when a part is said to be electrically coupled to another part, this includes not only a case where it is directly connected but also a case where it is connected with another element interposed therebetween.

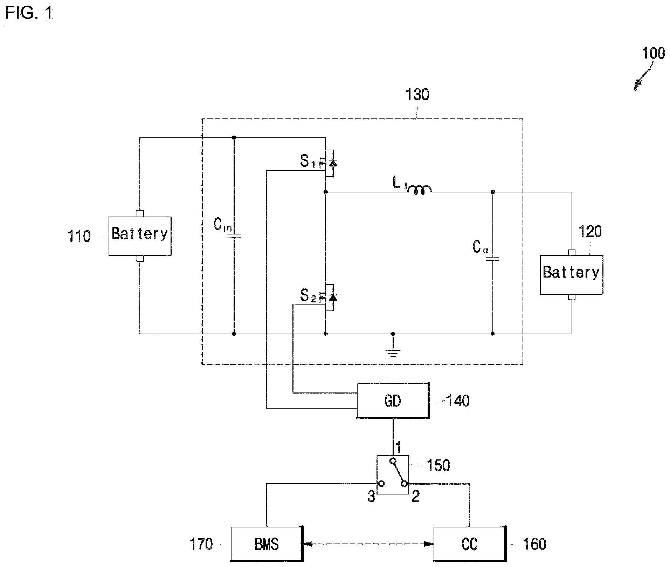

Referring to FIG. 1, a structural diagram showing a vehicle converter system according to some embodiments of the present disclosure is shown.

As shown in FIG. 1, a converter system 100 for a vehicle may include a main battery 110, an auxiliary battery 120, a bi-directional converter 130, a gate driver 140, a control switch 150, a converter controller 160, and a battery management system (BMS) 170.

The main battery 110 may be a battery for providing driving energy (electrical energy) to a driving motor of a vehicle, and the main battery 110 may be a high voltage battery.

The auxiliary battery 120 may be a low voltage battery operating as a battery for an electronic load of a vehicle. Here, the low voltage of the auxiliary battery 120 may be a relatively low voltage, compared to the voltage of the main battery 110, and the high voltage of the main battery 110 may be a relatively high voltage, compared to the voltage of the auxiliary battery 120. The main battery 110 may supply power to an electrically driven auxiliary device or provide auxiliary energy in a section (period) where energy consumption is high, such as starting a vehicle. For example, the electrically driven auxiliary device may include electrical components such as brakes, steering devices, and air conditioners, but embodiments according to the present disclosure are not limited thereto. The auxiliary battery 120 may supply power to an electronic control system for controlling electrical components of a vehicle.

The bi-directional converter 130 is electrically connected between the main battery 110 and the auxiliary battery 120. The bi-directional converter 130 may include a main capacitor Cᵢₙ, an auxiliary capacitor Cₒ, an inductor L₁, a first switch S₁, and a second switch S₂.

The bi-directional converter 130 may include the main capacitor Cᵢₙ connected in parallel with the main battery 110 and the auxiliary capacitor Cₒ connected in parallel with the auxiliary battery 120. The main capacitor Cᵢₙ and the auxiliary capacitor Cₒ may reduce noises by smoothing the voltages of the main battery 110 and auxiliary battery 120, respectively.

The inductor L₁ may have a first electrode electrically connected between the second electrode of the first switch S₁ and a first electrode of the second switch S₂, and a second electrode electrically connected to a positive electrode of the auxiliary battery 120 and the auxiliary capacitor Cₒ.

The first switch S₁ and the second switch S₂ are connected in series, and the first switch S₁ and the second switch S₂ connected in series are collectively connected in parallel to the main battery 110 and the main capacitor Cᵢₙ.

For example, in the first switch S₁, the first electrode may be electrically connected to the positive electrode of the main battery 110 and the main capacitor Cᵢₙ, and the second electrode may be electrically connected to the inductor L₁ and the first electrode of the second switch S₂. The first switch S₁ may have a control electrode electrically connected to the gate driver 140.

In the second switch S₂, the first electrode may be electrically connected to the inductor L₁ and the second electrode of the first switch S₁, and the second electrode may be electrically connected to a negative electrode of the main battery 110, a negative electrode of the auxiliary battery 120, the main capacitor Cᵢₙ, and the auxiliary capacitor Cₒ. The second switch S₂ may have a control electrode electrically connected to the gate driver 140.

The first switch S₁ and the second switch S₂ may be driven by a pulse width modulation (PWM) signal applied from the gate driver 140. The first switch S₁ and the second switch S₂ may be controlled according to the switching frequency and duty cycle applied from the gate driver 140. The first switch S₁ and the second switch S₂ may be composed of field effect transistors (FETs), but embodiments according to the present disclosure are not limited thereto.

The bi-directional converter 130 may repeatedly perform the process of instantaneously storing and discharging energy in the inductor L by the PWM signal applied to the control electrodes of the first switch S₁ and the second switch S₂, thereby performing power conversion between battery 110 and auxiliary battery 120. The bi-directional converter 130 may operate in a buck mode in which the output voltage of the main battery 110 is converted into a charging voltage of the auxiliary battery 120 or in a boost mode in which the output voltage of the auxiliary battery 120 is converted into the charging voltage of the main battery 110. The bi-directional converter 130 may generally operate in a buck mode, and may operate in a boost mode for a section (period) in which energy consumption is high in the main battery 110. The bi-directional converter 130 may operate in a boost mode or a buck mode by the PWM signal applied from the gate driver 140.

The gate driver 140 may be electrically connected to the converter controller 160 or the battery management system 170 by the operation of the control switch 150. In addition, the gate driver 140 may receive a control signal from the converter controller 160 or the battery management system 170 to apply the PWM signal for driving the first switch S₁ and the second switch S₂ of the bi-directional converter 130.

The control switch 150 may be a single pole double throw (SPDT) switch. The control switch 150 may include a common terminal 1, a first terminal 2, and a second terminal 3. In the control switch 150, the common terminal 1 and the first terminal 2 may be electrically connected to each other, or the common terminal 1 and the second terminal 3 may be electrically connected to each other.

The converter controller 160 may be electrically connected to the gate driver 140 through the control switch 150. Here, in the control switch 150, the common terminal 1 and the first terminal 2 may be electrically connected to each other. The converter controller 160 may transfer a control signal to the gate driver 140 through the control switch 150, through which the gate driver 140 may control the driving mode of the bi-directional converter 130. The converter controller 160 may communicate with the battery management system 170. For example, when mounted on different boards, the converter controller 160 and the battery management system 170 may communicate through CAN communication, and when mounted on the same board, the converter controller 160 and the battery management system 170 may communicate through SPI communication. The communication method between the converter controller 160 and the battery management system 170 is not limited to those disclosed herein.

That is, the battery management system 170 may periodically check whether or not there is an abnormality in the converter controller 160 through communication. The battery management system 170 can control driving of the control switch 150 when it is determined that an abnormality has occurred in the converter controller 160 through communication with the converter controller 160. That is, when a failure occurs in the converter controller 160, the battery management system 170 may control the common terminal 1 and the second terminal 3 of the control switch 150 to be electrically connected to each other.

As such, in the converter system 100 for a vehicle, when a failure occurs in the converter controller 160, the battery management system 170 may control driving of the bi-directional converter 130 through the gate driver 140 in an emergency mode. Here, the battery management system 170 may control the bi-directional converter 130 in an emergency mode to operate in the buck mode. In addition, the vehicle may operate in an emergency mode under the control of the battery management system 170 to enable steering adjustment and to prevent or reduce occurrence of problems due to steering may be adjusted, and problems caused by stopping the operation of the control systems. In addition, the battery management system 170 may inform a driver that the vehicle is operated in an emergency mode through a dashboard, and may induce the driver to move the vehicle in an emergency mode and check an abnormal state. Even when a failure occurs in the converter controller 160, the vehicle converter system 100 can control driving of the bi-directional converter 130 in the battery management system 170, thereby relatively improving vehicle safety.

Of course, the battery management system 170 may be electrically connected to the main battery 110, and may periodically monitor the charging/discharging state of the main battery 110. In addition, the battery management system 170 may control charging and discharging of the main battery 110.

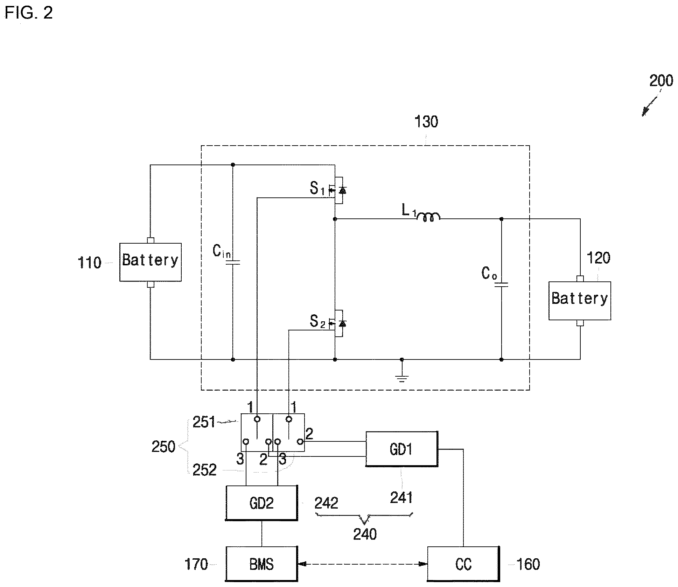

Referring to FIG. 2, a structural diagram showing a converter system for a vehicle according to some embodiments of the present disclosure is shown.

As shown in FIG. 2, a converter system 200 for a vehicle may include a main battery 110, an auxiliary battery 120, a bi-directional converter 130, a gate driver 240, a control switch 250, a converter controller 160, and a battery management system 170. Here, the vehicle converter system 200 may be similar to the previously described vehicle converter system 100 in terms of the main battery 110, the auxiliary battery 120, the bi-directional converter 130, the converter controller 160, and the battery management system 170. According to some embodiments, in the vehicle converter system 200, the gate driver 240 may include a first gate driver 241 and a second gate driver 242, and the control switch 250 may include a first control switch 251 and a second control switch 252. The following description will focus on the gate driver 240 and the control switch 250, which are different from the corresponding components of the vehicle converter system 100.

The first control switch 251 and the second control switch 252 may be single pole double throw (SPDT) switches. The first control switch 251 may have a common electrode 1 electrically connected to the bi-directional converter 130, a first electrode 2 electrically connected to the first gate driver 241, and a second electrode 3 electrically connected to the second gate driver 242. Here, the control electrode 1 of the first control switch 251 may be connected to a first switch S₁ of the bi-directional converter 130. That is, the first control switch 251 may control a PWM signal applied to the first switch S₁ of the bi-directional converter 130 to be applied from the first gate driver 241 or the second gate driver 242.

In addition, the second control switch 252 may have the control electrode 1 electrically connected to the bi-directional converter 130, the first electrode 2 electrically connected to the first gate driver 241, and the second electrode 3 electrically connected to the second gate driver 242. Here, the control electrode 1 of the second control switch 252 may be connected to a second switch S₂ of the bi-directional converter 130. That is, the second control switch 252 may control a PWM signal applied to the second switch S₂ of the bi-directional converter 130 to be applied to the first gate driver 241 or the second gate driver 242.

Here, the first control switch 251 and the second control switch 252 may operate in the same way. That is, in the first control switch 251, the common electrode 1 and the first electrode 2 may be connected to each other, and in the second control switch 252, the common electrode 1 and the first electrode 2 may also be connected to each other. The control signals of the first control switch 251 and the second control switch 252 may be applied from the battery management system 170.

Therefore, the first switch S₁ and the second switch S₂ of the bi-directional converter 130 may receive PWM signals from the same gate driver of the first gate driver 241 and the second gate driver 242. For example, when the first switch S₁ of the bi-directional converter 130 is electrically connected to the first gate driver 241, the second switch S₂ may also be electrically connected to the first gate driver 241. Of course, when the first switch S₁ of the bi-directional converter 130 is electrically connected to the second gate driver 242, the second switch S₂ may also be electrically connected to the second gate driver 242.

When the common terminal 1 and the first terminal 2 are connected to each other in the first control switch 251 and the second control switch 252, the first gate driver 241 may receive a control signal from the converter controller 160 to control the operation mode of the bi-directional converter 130.

In addition, when the common terminal 1 and the second terminal 3 are connected to each other in the first control switch 251 and the second control switch 252, the second gate driver 242 may receive a control signal from the battery management system 170 to control the operation mode of the bi-directional converter 130.

Here, the battery management system 170 may periodically check through communication whether or not there is an abnormality in the converter controller 160. Through communication with the converter controller 160, the battery management system 170 can control driving of the control switch 250 when it is determined that an abnormality has occurred in the converter controller 160. That is, when a failure occurs in the converter controller 160, the battery management system 170 may control the common terminal 1 and the second terminal 3 of the first control switch 251 and the second control switch 252 to be electrically connected to each other.

The battery management system 170 may control the bi-directional converter 130 to supply the minimum power that the vehicle can drive in emergency mode at a low frequency, although it may be difficult to control the high-speed frequency like the converter controller 160.

Additionally, in the vehicle converter system 200, the converter controller 160 and the battery management system 170 can be separately controlled independently of each other, and even when a failure occurs in the first gate driver 241 or the second gate driver 242 as well as the converter controller 160, the bi-directional converter 130 can be safely driven, thereby improving safety.

As described above, in the converter system for a vehicle according to some embodiments of the present disclosure, a battery management system can control driving of a bi-directional converter even when a converter controller fails, and thus vehicle safety can be relatively improved.

While the foregoing embodiments illustrate and describe aspects of a converter system for a vehicle according to some embodiments of the present disclosureit will be understood by a person skilled in the art that various changes in form and details may be made therein without departing from the scope of the invention as defined by the following claims.

## Claims

1. A converter system for a vehicle, comprising:
a bi-directional converter electrically connectable between a main battery and an auxiliary battery and configured to perform power conversion;
a gate driver electrically connected to the bi-directional converter and configured to apply a PWM signal for controlling a driving mode of the bi-directional converter;
a converter controller electrically connected to the gate driver and configured to apply a control signal for controlling driving of the gate driver;
a control switch interposed between the converter controller and the gate driver and configured to connect or disconnect a connection between the converter controller and the gate driver; and
a battery management system electrically connected to the gate driver through the control switch and configured to apply a control signal to control driving of the gate driver based on an abnormality in the converter controller.

2. The converter system as claimed in claim 1, wherein the control switch has a common terminal connected to the gate driver, a first terminal connected to the converter controller, and a second terminal connected to the battery management system, and the common terminal is configured to be electrically connected to the first terminal or the second terminal.

3. The converter system as claimed in claim 1 or 2, wherein the battery management system is configured to control driving of the control switch according to whether there is an abnormality in the converter through communication with the converter controller.

4. The converter system as claimed in claim 1, 2, or 3, wherein the battery management system is configured to control the gate driver to drive the bi-directional converter in a buck mode.

5. The converter system as claimed in any one of claims 1 to 4, wherein the battery management system is electrically connected to the control switch and is configured to control driving of the control switch according to whether there is an abnormality in the converter controller.

6. The converter system as claimed in any one of claims 1 to 5, wherein the battery management system is configured to monitor and control charging and discharging of the main battery when electrically connected to the main battery.

7. A converter system for a vehicle, comprising:
a bi-directional converter electrically connectable between a main battery and an auxiliary battery and configured to perform power conversion;
gate driver electrically connected to the bi-directional converter and configured to apply a PWM signal for controlling a driving mode of the bi-directional converter;
a converter controller electrically connected to the gate driver and configured to apply a control signal for controlling driving of the gate driver;
a control switch interposed between the gate driver and the bi-directional converter and configured to connect or disconnect a connection between the gate driver and the bi-directional converter; and
a battery management system electrically connected to the gate driver and configured to control driving of the bi-directional converter through the gate driver by controlling driving of the control switch based on an abnormality in the converter controller.

8. The converter system as claimed in claim 7, wherein the bi-directional converter comprises:
a main capacitor connected in parallel with the main battery when the converter system is connected between the main battery and the auxiliary battery;
a first switch and a second switch connected in parallel to the main capacitor and connected in series to each other;
an inductor having a first electrode connected between the first switch and the second switch, and having a second electrode connected to the auxiliary battery; and
an auxiliary capacitor connected in parallel with the auxiliary battery when the converter system is connected between the main battery and the auxiliary battery.

9. The converter system as claimed in claim 7 or 8, wherein the gate driver comprises:
a first gate driver electrically connected between the converter controller and the control switch; and
a second gate driver electrically connected between the battery management system and the control switch.

10. The converter system as claimed in claim 9, wherein the control switch comprises:
a first control switch having a common electrode electrically connected to a control electrode of the first switch and configured to electrically connect the first gate driver or the second gate driver to the first switch; and
a second control switch having a common electrode electrically connected to a control electrode of the second switch and configured to electrically connect the first gate driver or the second gate driver to the second switch.

11. The converter system as claimed in claim 10, wherein the first control switch and the second control switch are configured to operate in a same way, and both are configured to be connected to the first gate driver, and both are configured to be electrically connected to the second gate driver.
